# EUROPÄISCHE PATENTSCHRIFT

(11) **EP 0 428 058 B1**
(45) Veröffentlichungstag und Bekanntmachung des Hinweises auf die Patenterteilung: **25.05.1994**
(21) Anmeldenummer: 90121345.4
(22) Anmeldetag: 08.11.1990
(51) Int. Cl.: B23B 31/20

(54) **Spannfutter**
Chuck
Mandrin

(30) Priorität: 11.11.1989 DE 3937570
(43) Veröffentlichungstag der Anmeldung: 22.05.1991
(73) Patentinhaber: Schmidt, Claus, D-74321 Bietigheim-Bissingen (DE)
(72) Erfinder: Schmidt, Claus, D-74321 Bietigheim-Bissingen (DE)
(74) Vertreter: Abel, Martin, Dipl.-Ing.

(56) Entgegenhaltungen:
- GB-A- 1 295 827
- US-A- 1 359 077
- US-A- 2 746 758

## Beschreibung

Die Erfindung betrifft ein Spannfutter nach dem Oberbegriff des Patentanspruches 1.

Ein Spannfutter dieser Art geht aus der GB-A-1,295,827 hervor. Es besitzt einen Spannkopf mit einem käfigartigen Grundkörper, der in radial ausgerichteten Aufnahmen eine Mehrzahl von radial beweglichen Spannbacken aufnimmt. Die Spannbacken stützen sich über elastisch verformbare Haltekörper am Grundkörper ab. Zur Befestigung des Spannkopfes in einem Futterkörper dient eine Beaufschlagungseinrichtung, die von einem Schraubteil gebildet wird, das unmittelbar gegen die Stirnseite der Spannbacken geschraubt wird. Die Handhabung dieses Spannfutters ist relativ umständlich. Beim Betätigen des Schraubteiles kann überdies Verschleiß an den zugewandten Stirnflächen der Spannbacken auftreten, der sich nachteilig auf die Einspannpräzision und die Rundlaufeigenschaften auswirkt. In dieser Hinsicht ist auch problematisch, daß seitens der Spannbacken und des Grundkörpers einerseits und seitens des Futterkörpers und des Schraubteiles andererseits eine große Anzahl von Flächenpaarungen exakt aufeinander abgestimmt werden muß, so daß selbst bei hohem Herstellungsaufwand gewisse Abstriche in Bezug auf die Genauigkeit zu machen sind.

Es ist die Aufgabe der vorliegenden Erfindung, ein Spannfutter der eingangs genannten Art zu schaffen, das bei einfacher Handhabung eine hohe Präzision beim Spannen eines Werkstückes ermöglicht und eine hohe Rundlaufgenauigkeit gewährleistet.

Gelöst wird die vorgenannte Aufgabe bei einem eingangs genannten Spannfutter mit der Verwirklichung der Merkmale des kennzeichnenden Teiles des Patentanspruches 1.

Somit ergibt sich ein Spannkopf, bei dem die in den radialen Aufnahmen angeordneten Spannbacken zum einen elastisch über die Haltekörper und zum anderen über die Kupplungselemente mit dem Grundkörper verbunden sind. Als Beaufschlagungseinrichtung kommt eine Zugeinrichtung zum Einsatz, die am Grundkörper angreift, so daß die axial nach innen gerichtete Beaufschlagung der Spannbacken lediglich mittelbar unter Zwischenschaltung des Grundkörpers erfolgt. Die Kupplungselemente gewährleisten stets den axialen Zusammenhalt zwischen den Spannbacken und dem Grundkörper, selbst bei hohen Spannkräften. Auf eine zusätzliche Abstützung der Spannbacken im Bereich der offenen Vorderseite der Aufnahmen kann verzichtet werden, was sich verschleißmindernd auswirkt. Bei einfacher Handhabung lassen sich Werkstücke auf diese Weise mit hoher Präzision spannen und es stellt sich auch bei großem axialem Spannhub eine hohe Rundlaufgenauigkeit ein.

Zwar gehen sowohl aus der EP-A-0 258 771 und aus der US-A-2,746,758 bereits Spannfutter hervor, bei denen der Spannvorgang mittels einer Zugeinrichtung ausgeübt wird. Der jeweilige Spannkopf verfügt allerdings nicht über einen Grundkörper, sondern besteht lediglich aus einer Anzahl von Spannbacken, die über gummielastische Haltekörper miteinander verbunden sind. Es mangelt somit an der wünschenswerten Seitenstabilität und beim Auswechseln des Spannkopfes müssen die Spannbacken aufwendig im einzelnen aus der Zugeinrichtung ausgehängt werden.

Vorteilhafte Weiterbildungen der Erfindung gehen aus den Unteransprüchen hervor.

Die Kupplungselemente umfassen zweckmäßigerweise ineinander eingreifende Nasen und Ausnehmungen, wobei die Spannbacken zweckmäßigerweise in den Grundkörper eingehängt sind.

Die Haltekörper sind vorzugsweise in Erweiterungen der jeweils zugeordneten Aufnahme angeordnet. Als Haltekörper kann Gummi oder elastischer Kunststoff wirken, mit dem die Erweiterungen gefüllt sind. Bevorzugt sieht man vor, daß die Spannbacken im entlasteten Zustand des Spannkopfes mit ihren Gegenführungsflächen radial aus dem Grundkörper herausragen. Dies erreicht man am besten damit, daß man die Haltekörper so ausbildet, daß sie bestrebt sind, die Spannbacken radial nach außen zu versetzen.

Bewegt man den Spannkopf axial aus der Ausnehmung des Futterkörpers heraus, wird das im Spannkopf angeordnete Werkstück wegen des radialen Auseinanderbewegens der Spannbackenanordnung freigegeben.

Eine besonders hohe Rundlaufgenauigkeit stellt sich ein, wenn die in Umfangsrichtung des im wesentlichen kegelstumpfförmigen Spannkopfes gemessene Breite der einzelnen Spannbacken kleiner ist als der Innenradius der Ausnehmung des in Gebrauchsstellung zugeordneten Futterkörpers.

Um den Grundkörper des Spannkopfes mit der Zugeinrichtung einfach verbinden und lösen zu können, sieht eine zweckmäßige Ausgestaltung der Erfindung zur lösbaren Verbindung der Zugeinrichtung und des Grundkörpers einen Bajonettverschluß vor. Hierzu können an beiden Teilen einander im verbundenen Zustand hintergreifende Vorsprünge und Nasen vorgesehen sein. Um sicherzustellen, daß die hergestellte Bajonettverschlußverbindung sich während des Betriebes nicht von selbst löst, kann am Spannkopf eine radial nach außen offene Ausnehmung vorgesehen sein, in die in Gebrauchsstellung ein federbelasteter Rastbolzen des Futterkörpers lösbar eingreift. Zur Lösung der Rastverbindung verfügt der Grundkörper vorzugsweise über eine einerseits in die Ausnehmung mündende und andererseits zur Vorderseite des Grundkörpers offene Bohrung, in die ein mit dem Rastbolzen zusammenarbeitender Entriegelungsbolzen einer Entriegelungsvorrichtung eingesteckt werden kann.

Eine weitere Möglichkeit zum Erhalt einer verdrehsicheren Aufnahme des Spannkopfes in der Ausnehmung des Futterkörpers besteht darin, die Führungsflächen an axial ausgerichteten Nuten des Futterkörpers auszubilden, in die die Spannbacken mit ihren jeweiligen Gegenführungsflächen insbesondere formschlüssig eingreifen.

Nachfolgend wird die Erfindung anhand der beiliegenden Zeichnung näher erläutert. Es zeigen im einzelnen:
- Figur 1: ein Ausführungsbeispiel des Spannfutters in Stirnansicht,
- Figur 2: einen Schnitt entlang der Linie II-II nach Figur 2,
- Figur 3: den bei dem Spannfutter verwendeten Spannkopf in perspektivischer Seitenansicht,
- Figur 4: das in Figur 2 dargestellte Spannfutter mit einer Entriegelungsvorrichtung,
- Figur 5: einen Schnitt entlang der Linie V-V nach Figur 4,

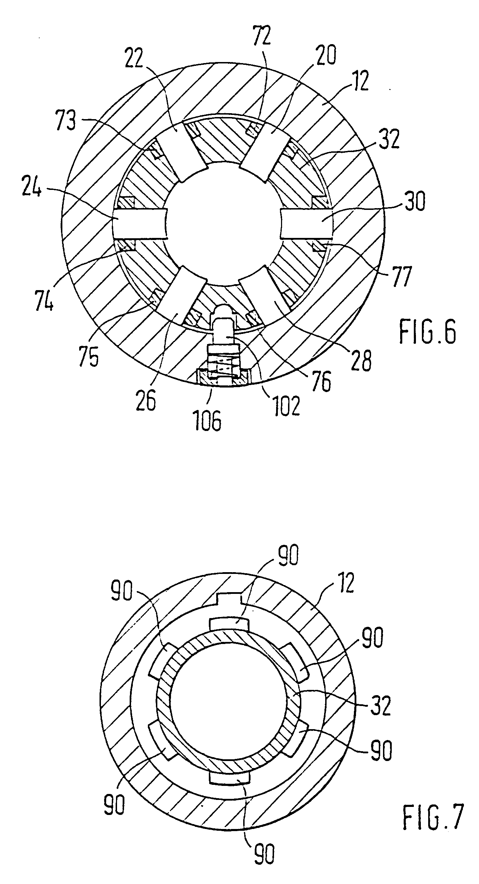

- Figur 6: einen Schnitt entlang der Linie VI-VI nach Figur 2 und
- Figur 7: einen Schnitt entlang der Linie VII-VII nach Figur 2.

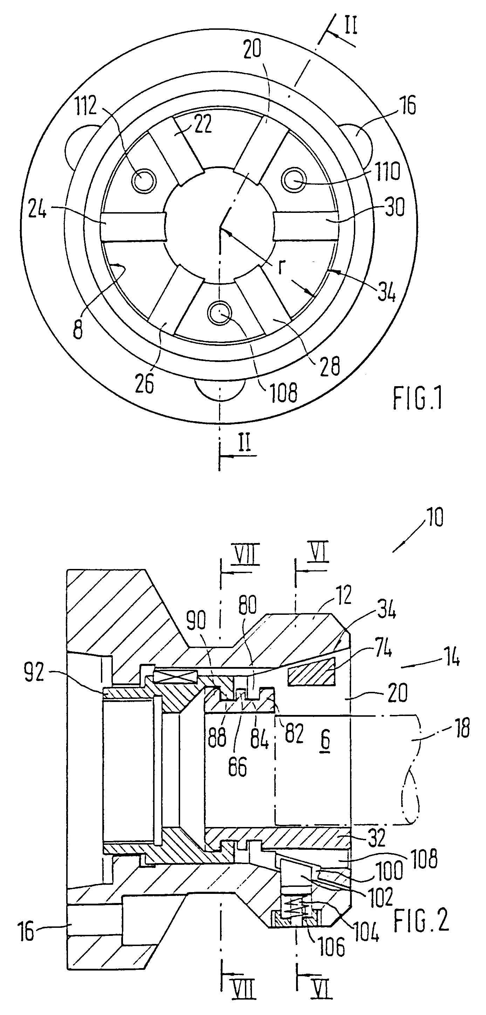

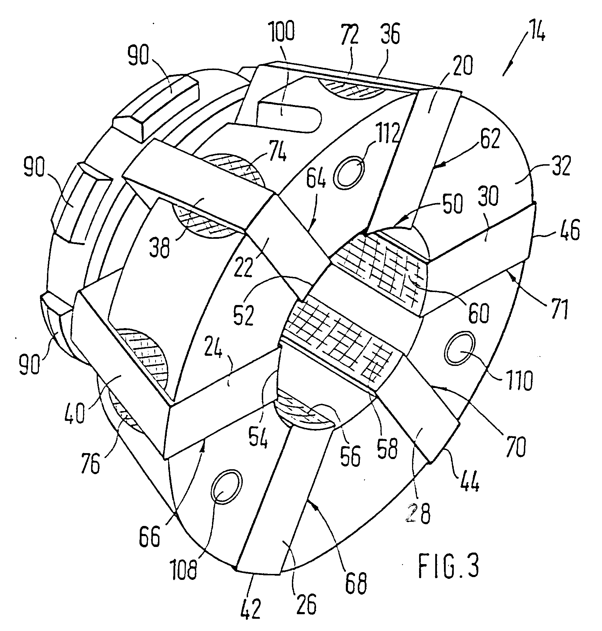

In den Figuren 1 und 2 ist ein Spannfutter 10 für Werkzeugmaschinen mit einem eine kegelstumpfförmige Ausnehmung 8 mit Führungsflächen 34 aufweisenden Futterkörper 12 dargestellt, in den ein mit einer Zugeinrichtung 92 zusammenarbeitender und Spannbacken 20 - 30 mit Gegenführungsflächen 36 bis 46 besitzender Spannkopf 14 mit einer axialen Aufnahmeöffnung 6 für Werkstücke 18 einbringbar ist, wobei die Führungsflächen 34 mit den Gegenführungsflächen 36 bis 46 in Druckverbindung stehen. Der Spannkopf 14 besitzt radial ausgerichtete Aufnahmen 62 bis 71 (vgl. Fig. 3) für die radial verstellbaren Spannbacken 20 bis 30. Die Breite der Spannbacken 20 bis 30 ist hierbei kleiner als der Innenradius r der Ausnehmung 8 (vgl. Fig. 1). Im wirksamen Zustand (vgl. Fig. 2) schließt der Spannkopf 14 mit dem Futterkörper 12 bündig ab, und das Werkstück 18 ist von den Spannbacken 20 bis 30 festgehalten. Die Fig. 1 und 3 lassen ferner erkennen, daß der radiale Querschnitt der Spannbacken 20 bis 30 annähernd rechteckförmig ist. Lediglich die Gegenführungsflächen 36 bis 46 sowie die Spannflächen 50 bis 60, die mit dem Werkstück 18 in Druckverbindung stehen, sind konvex bzw. konkav ausgebildet. Die Aufnahmen 62 bis 71 besitzen die Spannbacken 20 bis 30 umgebende Erweiterungen 72,74 und 76, die mit elastisch verformbaren, die Spannbacken 20 bis 30 mit dem Spannkopf 14 verbindbaren Haltekörpern ausgefüllt sind. Diese Erweiterungen 72,74 und 76 sind mit Gummi oder Kunststoff ausgefüllt und so ausgebildet, daß sie die Spannbacken 20 bis 30 im unwirksamen Zustand des Spannkopfes 14 (Fig. 3) radial nach außen versetzen. Die Gegenführungsflächen 36 bis 46 ragen daher aus der radialen Außenwand des Spannkopfes 14 heraus. Ferner lassen die Fig. 2 und 3 erkennen, daß die Aufnahmen 62 bis 71 zur Außenseite des Spannkopfes 14 hin offen sind und daß die Spannbacken 20 bis 30 mit dem Spannkopf über Kupplungselemente 80 verbindbar sind.

Die Kupplungselemente 80 bestehen aus radial nach außen gerichteten Nasen der Spannbacken 20 bis 30 und aus einer Ausnehmung 84, hier eine Ringnut, die von zwei Ringstegen 86 und 82 definiert ist, in welche die Nasen eingreifen. Somit besteht der Spannkopf aus einem Grundkörper mit radial ausgerichteten Ausnehmungen, in welche die separat herstellbaren Spannbacken eingesetzt, über ihre Nasen 80 in die Ringnut 84 eingreifen und durch Haltekörper fixiert werden. Die Spannbacken 20 bis 30 werden, wird der Spannkopf 14 durch die Zugeinrichtung 92 betätigt, in axialer Richtung des Werkstückes 18 bewegt. Hierbei arbeiten die Spannbacken mit der Führungsfläche 34 zusammen, die bewirkt, daß sie in radialer Richtung nach innen und zum Werkstück 18 hin bewegt werden, bis auf das Werkstück 18 der entsprechende Druck ausgeübt wird. Da die Breite der Gegenführungsflächen 36 bis 46 mit Bezug auf den Radius der Ausnehmung 8 gering ist, ist eine im wesentlichen ganzflächige Verbindung zwischen der Führungsfläche 34 und den Gegenführungsflächen 36 bis 46 gewährleistet. Die Führungsfläche 34 fällt zur Längsmittelachse des Werkstückes 18 und einen Winkel von 15° ab. Wird die Breite der Gegenführungsflächen 36 bis 46 mit Bezug auf den Innenradius der Ausnehmung 8 noch kleiner gewählt, dann wird bei der Einstellung des Werkstückes 18 eine noch höhere Präzision erreicht. Die Zugeinrichtung 92 übt auf den Spannkopf 14 und hierbei insbesondere auf die Spannbacken erhebliche Kräfte aus, so daß es bei Gegenführungsflächen mit geringer Breite zweckmäßig ist, deren Anzahl zu erhöhen. Im vorliegenden Ausführungsbeispiel sind sechs Spannbacken vorgesehen. Es besteht jedoch die Möglichkeit, die Anzahl der Spannbacken auf 8,12 oder 24 zu erhöhen. Bei 24 Spannbacken kann eine Genauigkeit des Rundlaufes von 10⁻³ mm erreicht werden.

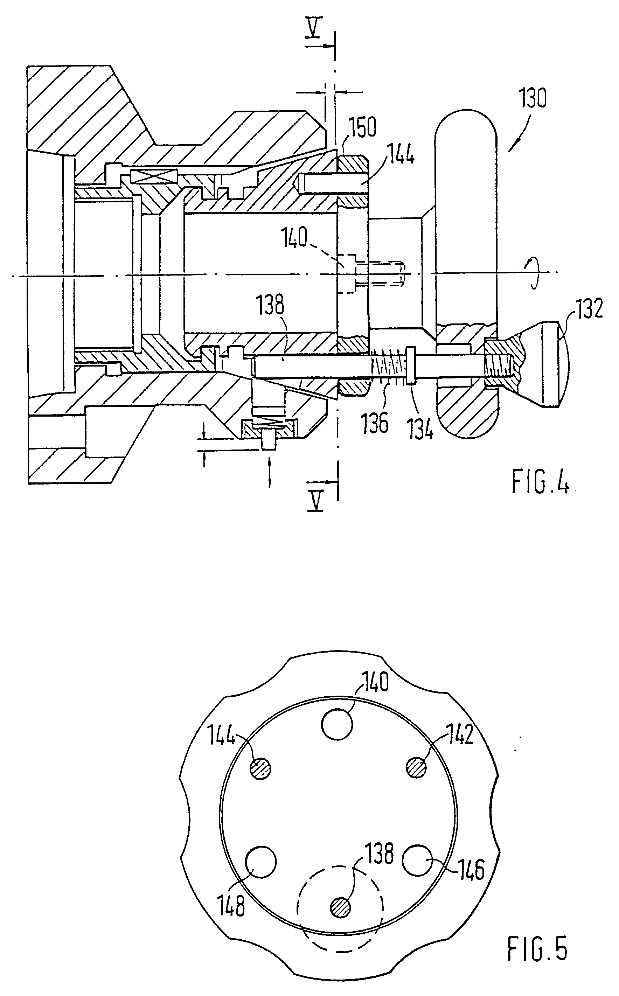

Die Fig. 2 und 3 lassen ferner erkennen, daß der Spannkopf 10 mit der Zugeinrichtung 92 über einen Bajonettverschluß lösbar verbindbar ist. Hierbei besitzt der Spannkopf radial nach außen ausgerichtete und umfangsseitig angeordnete Bajonettverschlußvorsprünge 90, die mit radialen nach innen ausgerichteten Bajonettverschlußnasen 88 der Zugeinrichtung 92 zusammenarbeiten. Der Spannkopf 14 besitzt somit zwei außenseitig verlaufende Ringnuten, zwischen denen ein Ringvorsprung 86 ausgebildet ist. In die eine Ringnut greifen die Nasen der Spannkörper 20 bis 30 ein, während in die andere Ringnut die Bajonettverschlußnasen 88 eingreifen. Beim Einbringen des Spannkopfes 14 in den Futterkörper 12 werden die Bajonettverschlußnasen 88 zwischen die Bajonettverschlußvorsprünge 90 (vgl. Fig. 3) eingefahren, der Spannkopf 14 wird geringfügig verdreht, bis die Bajonettverschlußvorsprünge 90 die Bajonettverschlußnasen 88 hintergreifen. Um diese Verbindung während des Betriebes zu erhalten, besitzt der Spannkopf 14 eine radial nach außen offene Ausnehmung 100, in die ein federbelastender Rastbolzen 102 des Futterkörpers 112 eingreift. Der Rastbolzen 102 besitzt einen Führungsbolzen 104 sowie eine Druckfeder 106, die bestrebt ist, den Bolzen in der Rastaufnahme 100 zu halten. Um den Spannkopf 14 äus dem Futterkörper 12 herausnehmen zu können, besitzt der Spannkopf 14 eine axiale, in die Ausnehmung 100 mündente und zur Stirnseite des Spannkopfes 14 offene Bohrung 108, in die ein mit dem Rastbolzen 102 zusammenarbeitender und diesen aus der Ausnehmung 100 verschiebbarer Bolzen 138 (vgl. Fig. 4) einer Entriegelungsvorrichtung 130 einsteckbar ist.

Der Bolzen 138 arbeitet mit einer Rückholfeder 136 zusammen, die bestrebt ist, den Bolzen 138 aus der Ausnehmung 110 herauszuholen. Die Entriegelungsvorrichtung 130 besitzt insgesamt zwei mit dem Bolzen 38 etwa parallel verlaufende Stifte 142 und 144, die in Ausnehmungen 108,110 und 112 des Spannkopfes 14 einbringbar sind. Die dem Spannkopf 14 zugekehrte Stirnseite der Entriegelungsvorrichtung 130 besitzt Magnetkörper 140, 146 und 148, die den Spannkopf 14 halten.

Das Bestücken des Spannfutters mit einem Spannkopf 14 wird wie folgt durchgeführt: Es wird ein Spannkopf 14 (vgl. Fig. 3) gewählt, dessen Aufnahme 6 geringfügig größer ist als der Durchmesser des Werkstückes 18. Dieser Spannkopf 14 wird in den Futterkörper 12 eingesetzt, wobei die Bajonettverschlußnasen zwischen die Bajonettverschlußvorsprünge eingefahren werden. In dieser Position wird der von der Entriegelungsvorrichtung 30 getragene Spannkopf verdreht, bis die Bajonettverschlußvorsprünge die Bajonettverschlußnasen hintergreifen. Dabei schnappt auch der Rastvorsprung 102 in die Rastaufnahme 100 ein, der Benutzer hat die Sicherheit, daß der Spannkopf 14 den Betriebszustand erreicht hat. Die Stirnseite des Spannkopfes 14 ragt geringfügig aus der Stirnseite des Futtekörpers 12 heraus. In dieser Position wird der Spannkopf 14 mit dem Werkstück 18 bestückt und die Zugeinrichtung 92 wird betätigt, was zur Fogle hat, daß der Spannkopf 14 nach innen zu versetzt wird. Hierbei arbeitet die Führungsfläche 34 mit den Gegenführungsflächen 36 bis 46 zusammen, was zur Folge hat, daß die Spannbacken 20 bis 30 radial nach innen zu versetzt werden und das Werkstück 18 festhalten. Bei Erreichen der Arbeitsposition schließt der Spannkopf 14 mit dem Futterkörper 12 bündig ab. Das Spannfutter 10 besitzt mehrere Bohrungen 16 für nicht näher dargestellte Schrauben, die das Spannfutter 10 z.B. mit einer Werkzeugmaschine verbinden können. Soll nun der Spannkopf mit dem Werkstück 18 vom Futterkörper 12 gelöst werden, dann wird die Entriegelungsvorrichtung 130 eingesetzt, in dem ihre Stifte 138, 142, 144 in die Bohrungen 108 und 144 eingesteckt werden. Danach wird der Bolzen 138 nach innen zu versetzt. Hierbei gleitet seine Stirnseite auf der Schräge des Raststiftes 102, wodurch er aus der Ausnehmung 100 versetzt wird. In dieser Position des Bolzens 138 (vgl. Fig. 4) kann der Spannkopf 14 um seine Achse verdreht werden, so daß der Bajonettverschluß gelöst wird. Danach kann der Spannkopf 14 aus dem Futterkörper 12 herausgezogen werden, da er zum einen von den Magneten 140, 146 und 148 gehalten ist und zum anderen wirken auf die Führungsfläche 34 radiale Druckkräfte, da die einzelnen Spannbacken durch die Haltekörper vorgespannt sind.

Es wäre selbstveständlich auch möglich, in die Führungsflächen axial ausgerichtete Nuten einzuarbeiten, in denen dann die Gegenführungsflächen der Spannbacken geführt werden. Wenn die Wände der Nuten eben und mit den Spannbacken formschlüssig verbindbar wären, dann kann mit einer erheblichen Genauigkeit gearbeitet werden.

## Patentansprüche

1. Spannfutter für Werkzeugmaschinen mit einem Futterkörper (12), der eine kegelstumpfförmige Ausnehmung (8) mit Führungsflächen (34) aufweist, mit einem in Gebrauchsstellung in die Ausnehmung (8) des Futterkörpers (12) eingesetzten Spannkopf (14), der eine axiale Aufnahmeöffnung (6) für Werkstücke (18) aufweist, wobei der Spannkopf (14) einen käfigförmigen Grundkörper (32) umfaßt, der mit radial ausgerichteten, zur axial nach außen weisenden Vorderseite hin offenen Aufnahmen (62 - 71) versehen ist, in denen Spannbacken (20 - 30) angeordnet sind, die über elastisch verformbare Haltekörper radial beweglich mit dem Grundkörper (32) verbunden sind, und die über in Gebrauchsstellung den Führungsflächen (34) zugewandte Gegenführungsflächen (36 - 46) verfügen, und wobei die Spannbacken (20 - 30) zum Spannen eines in die Aufnahmeöffnung (6) eingeführten Werkstückes mittels einer Beaufschlagungseinrichtung (92) so axial gerichtet beaufschlagt werden, daß sie mit ihren Gegenführungsflächen (36 - 46) gegen die jeweils zugeordnete Führungsfläche (34) arbeiten und dadurch radial in Richtung der Aufnahmeöffnung (6) verlagert werden, dadurch gekennzeichnet, daß als Beaufschlagungseinrichtung eine an dem Grundkörper (32) angreifende und diesen beim Spannen eines Werkstückes nach axial innen gerichtet beaufschlagende Zugeinrichtung (92) vorgesehen ist, und daß die Spannbacken (20 - 30) zusätzlich zu den elastisch verformbaren Haltekörpern mittels Axialkräfte übertragenden Kupplungselementen (80, 84) radial beweglich mit dem Grundkörper (32) verbunden sind.

2. Spannfutter nach Anspruch 1, dadurch gekennzeichnet, daß die Kupplungselemente (80, 84) ineinander eingreifende Nasen (80) und Ausnehmungen (84) umfassen.

3. Spannfutter nach Anspruch 2, dadurch gekennzeichnet, daß die Kupplungselemente (80, 84) eine am Grundkörper (32) vorgesehene Ausnehmung (84) und in diese eingreifende, radial ausgerichtete Nasen (80) an den Spannbacken (20 - 30) umfassen.

4. Spannfutter nach einem der Ansprüche 1 bis 3, dadurch gekennzeichnet, daß die Spannbacken (20 - 30) annähernd quaderförmige Klötze sind, die in Kupplungselemente (80) auslaufen.

5. Spannfutter nach einem der Ansprüche 1 bis 4, dadurch gekennzeichnet, daß die elastisch verformbaren Haltekörper in Erweiterungen (72, 74, 76) der zugeordneten Aufnahme (62 - 71) angeordnet sind.

6. Spannfutter nach einem der Ansprüche 1 bis 5, dadurch gekennzeichnet, daß die Haltekörper aus Gummi oder Kunststoff bestehen.

7. Spannfutter nach einem der Ansprüche 1 bis 6, dadurch gekennzeichnet, daß die Spannbacken (20 - 30) durch die Haltekörper im unwirksamen Zustand in einer bezüglich dem Grundkörper (32) - im Vergleich zum wirksamen, ein Werkstück (18) spannenden Zustand - radial nach außen versetzten Position gehalten werden.

8. Spannfutter nach einem der Ansprüche 1 bis 7, dadurch gekennzeichnet, daß die Breite der Spannbacken (20 - 30) kleiner ist als der Innenradius (r) der Ausnehmung (8) des Futterkörpers (12).

9. Spannfutter nach einem der Ansprüche 1 bis 8, dadurch gekennzeichnet, daß die Gegenführungsflächen (36 - 46) konvex gekrümmt sind, wobei ihr Krümmungsradius etwa dem Krümmungsradius der Führungsflächen (34) entspricht.

10. Spannfutter nach einem der Ansprüche 1 bis 9, dadurch gekennzeichnet, daß zur lösbaren Verbindung der Zugeinrichtung (92) und des Grundkörpers (32) ein Bajonettverschluß vorgesehen ist.

11. Spannfutter nach Anspruch 10, dadurch gekennzeichnet, daß am Grundkörper (32) radial nach außen ragende Vorsprünge (90) vorgesehen sind, die im verbundenen Zustand radial nach innen ragende Nasen (88) der Zugeinrichtung (92) hintergreifen.

12. Spannfutter nach einem der Ansprüche 1 bis 11, dadurch gekennzeichnet, daß der Spannkopf (14) in Gebrauchsstellung bezüglich dem Futterkörper (12) verdrehgesichert ist, zu welchem Zweck am Grundkörper (32) eine radial nach außen hin offene Ausnehmung (100) vorgesehen ist, in die ein federbelasteter Rastbolzen (102) eingreift.

13. Spannfutter nach Anspruch 12, dadurch gekennzeichnet, daß im Grundkörper (32) eine axiale, in die Ausnehmung (100) mündende und zur Vorderseite des Grundkörpers (32) offene Bohrung (108) ausgebildet ist, in die ein mit dem Rastbolzen (102) zusammenarbeitender Entriegelungsbolzen (138) einer Entriegelungsvorrichtung (130) einsteckbar ist, um den Rastbolzen (102) aus der Ausnehmung (100) zu verschieben.

14. Spannfutter nach einem der Ansprüche 1 bis 13, dadurch gekennzeichnet, daß die Führungsflächen (34) von axial ausgerichteten Nuten des Futterkörpers (12) gebildet sind, in denen die Spannbacken (20 - 30) in der Gebrauchsstellung des Spannkopfes (14) mit ihren jeweiligen Gegenführungsflächen (36 - 46) geführt sind.

15. Spannfutter nach Anspruch 14, dadurch gekennzeichnet, daß die Wände der die Spannbacken (20 - 30) formschlüssig aufnehmenden Nuten eben sind.

## Claims

1. Chuck for machine tools with a chuck body (12) having a truncated-cone-shaped recess (8) with guide surfaces (34), with a gripping head (14) inserted in the recess (8) of the chuck body (12), said gripping head having an axial location hole (6) for workpieces (18), wherein the gripping head (14) comprises a cage-shaped basic body (32), which is provided with radially-aligned mountings (62-71), open towards the axially outwards facing front face, in which are mounted jaws (20-30), joined with radial movement facility to the basic body (32) by elastically deformable retaining bodies, and with mating surfaces (36-46) facing the guide surfaces (34) in the position of use, and wherein the jaws (20-30) are acted upon axially in such a way, for the clamping of a workpiece inserted in the location hole (6), by means of a loading device (92), that they act with their mating surfaces (36-46) against the respectively assigned guide surface (34) and are thereby shifted radially towards the location hole (6), characterized in that a tension device (92) engaging with the basic body (32) and acting upon the latter axially inwards when clamping a workpiece is provided as the loading device, and that the jaws (20-30) are connected to the basic body (32) with radial movement facility by coupling elements (80, 84) transfering axial forces, in addition to the elastically deformable retaining bodies.

2. Chuck according to claim 1, characterized in that the coupling elements (80, 84) comprise projections (80) and recesses (84) engaging with one another.

3. Chuck according to claim 2, characterized in that the coupling elements (80, 84) comprise a recess (84) provided on the basic body (32) and radially aligned projections (80) on the jaws (20-30) engaging in said recess.

4. Chuck according to any of claims 1 to 3, characterized in that the jaws (20-30) are roughly rectangular blocks, which terminate as coupling elements (80).

5. Chuck according to any of claims 1 to 4, characterized in that the elastically deformable retaining bodies are located in expansions (72, 74, 76) of the associated mounting (62-71).

6. Chuck according to any of claims 1 to 5, characterized in that the retaining bodies are made of rubber or plastic.

7. Chuck according to any of claims 1 to 6, characterized in that the jaws (20-30) are held by the retaining bodies in the inoperative state in a position offset radially outwards relative to the basic body (32) - in contrast to the operative position clamping a workpiece (18).

8. Chuck according to any of claims 1 to 7, characterized in that the width of the jaws (20-30) is less than the inside radius (r) of the recess (8) of the chuck body (12).

9. Chuck according to any of claims 1 to 8, characterized in that the mating surfaces (36-46) have a convex curvature, with their radius of curvature corresponding roughly to the radius of curvature of the guide surfaces (34).

10. Chuck according to any of claims 1 to 9, characterized in that a bayonet fixing is provided for releasable connection of the tension device (92) and the basic body (32).

11. Chuck according to claim 10, characterized in that, provided on the basic body (32) are radially outwards protruding projections (90) which in the connected state engage from behind with radially inwards protruding projections (88) of the tension device (92).

12. Chuck according to any of claims 1 to 11, characterized in that the gripping head (14), in the position of use, is fixed so as not to rotate relative to the chuck body (12), for which purpose a recess (100) in which a spring-loaded stop bolt (102) engages, open in the radially outwards direction, is provided in the basic body (32).

13. Chuck according to claim 12, characterized in that the basic body (32) is provided with an axial hole (108), emerging in the recess (100) and open towards the front of the basic body (32), in which may be inserted the unlocking bolt (130) of an unlocking device (130) acting in conjunction with the stop bolt (102), in order to displace the stop bolt (102) from the recess (100).

14. Chuck according to any of claims 1 to 13, characterized in that the guide surfaces (34) are formed by axially-aligned grooves of the chuck body (12), in which the jaws (20-30) are guided by their respective mating surfaces (36-46) in the position of use of the gripping head (14).

15. chuck according to claim 14, characterized in that the sides of the grooves positively engaging with the jaws (20-30) are flat.

## Revendications

1. Mandrin de serrage pour machines-outils, comportant un corps de mandrin (12) présentant un évidement (8) tronconique avec des surfaces de guidage (34), une tête de serrage (14) insérée, en position d'utilisation, dans l'évidement (8) du corps de mandrin (12), qui présente une ouverture réceptrice (6) axiale pour des outils (18), la tête de serrage (14) entourant un corps de base (32) en forme de cage, pourvu de logements (62-71) orientés radialement, ouverts en direction de la face avant, tournée axialement vers l'extérieur, dans lesquels des mors de serrage (20-30) sont disposés et sont reliés de façon radialement mobile au corps de base (32), au moyen de corps de maintien déformables élastiquement, et qui sont pourvus de contre-surfaces de guidage (36-46) tournées, en position d'utilisation, vers les surfaces de guidage (34), les mors de serrage (20-30), pour effectuer le serrage d'un outil introduit dans l'ouverture réceptrice (6), étant sollicités axialement, au moyen d'un dispositif de sollicitation (92), de telle sorte que leurs contre-surfaces de guidage (36-46) travaillent à l'encontre de la surface de guidage (34) qui leur est respectivement associée et sont, par conséquent, radialement décentrés en direction de l'ouverture réceptrice, caractérisé en ce qu'est prévu, comme dispositif de sollicitation, un dispositif de traction (92) agissant sur le corps de base (32) et le sollicitant axialement vers l'intérieur, lors du serrage d'un outil, et en ce que les mors de serrage (20-30), en plus des corps de maintien déformables élastiquement, sont reliés de façon radialement mobile au corps de base (32) au moyen d'éléments de couplage (80, 84) transmettant les forces axiales.

2. Mandrin de serrage selon la revendication 1, caractérisé en ce que les éléments de couplage (80, 84) comprennent des becs (80) et des évidements (84) engagés les uns dans les autres.

3. Mandrin de serrage selon la revendication 2, caractérisé en ce que les éléments de couplage (80, 84) comprennent un évidement (84) prévu sur le corps de base (32) et des becs (80), ménagés sur les mors de serrage (20-30), orientés radialement et engagés dans cet évidement.

4. Mandrin de serrage selon l'une des revendications 1 à 3, caractérisé en ce que les mors de serrage (20 - 30) sont des blocs ayant pratiquement la forme d'un parallélépipède, qui se terminent en éléments de couplage (80).

5. Mandrin de serrage selon l'une des revendications 1 à 4, caractérisé en ce que les corps de maintien déformables élastiquement sont logés dans des parties élargies (72, 74, 76) des logements (62-71) associés.

6. Mandrin de serrage selon l'une des revendications 1 à 5, caractérisé en ce que les corps de maintien sont réalisés en caoutchouc ou en matière synthétique.

7. Mandrin de serrage selon l'une des revendications 1 à 6, caractérisé en ce que les mors de serrage (20-30) sont maintenus, par les corps de maintien, dans une position décalée radialement vers l'extérieur vis-à-vis du corps de base (32), à l'état non-actif, opposé à l'état actif, dans lequel un outil (18) est serré.

8. Mandrin de serrage selon l'une des revendications 1 à 7, caractérisé en ce que la largeur des mors de serrage (20-30) est inférieure au rayon intérieur (r) de l'évidement (8) du corps de mandrin (12).

9. Mandrin de serrage selon l'une des revendications 1 à 8, caractérisé en ce que les contre-surfaces de maintien (36-46) sont courbées de façon convexe, leur rayon de courbure correspondant approximativement au rayon de courbure des surfaces de guidage (34).

10. Mandrin de serrage selon l'une des revendications 1 à 9, caractérisé en ce qu'une liaison à baïonnette est prévue pour assurer la liaison amovible entre le dispositif de traction (92) et le corps de base (32).

11. Mandrin de serrage selon la revendication 10, caractérisé en ce que des saillies (90) dépassant radialement vers l'extérieur sont prévues sur le corps de base (32), qui coopèrent, à l'état assemblé, avec des becs (88), dépassant radialement vers l'intérieur, du dispositif de traction (92).

12. Mandrin de serrage selon l'une des revendications 1 à 11, caractérisé en ce que la tête de serrage (14) est bloquée en rotation vis-à-vis du corps de mandrin (12), en position d'utilisation et, à cet effet, un évidement (100), ouvert radialement vers l'extérieur, est prévu sur le corps de base (32), évidement dans lequel s'engage un taquet d'enclenchement (102), placé sous l'action d'un ressort.

13. Mandrin de serrage selon la revendication 12, caractérisé en ce qu'est formé, dans le corps de base (32), un perçage (108) axial, débouchant dans l'évidement (100) et ouvert en direction de la face avant du corps de base (32), perçage dans lequel une goupille de déverrouillage (138) d'un dispositif de déverrouillage (130), coopérant avec le taquet d'enclenchement (102), est susceptible de pénétrer afin de dégager le taquet d'enclenchement (102) de l'évidement (100).

14. Mandrin de serrage selon l'une des revendications 1 à 13, caractérisé en ce que les surfaces de guidage (34) sont formées par des rainures, orientées axialement, du corps de mandrin (12), dans lesquelles les mors de serrage (20-30) sont guidés, par leurs contre-surfaces de guidage (36-46) respectives, en position d'utilisation de la tête de serrage (14).

15. Mandrin de serrage selon la revendication 14, caractérisé en ce que les parois des rainures, logeant, par complémentarité de formes, les mors de serrage (20-30), sont planes.
